# EUROPEAN PATENT SPECIFICATION

(11) **EP 1 780 012 B1**
(45) Date of publication and mention of the grant of the patent: **25.03.2009**
(21) Application number: 06254974.6
(22) Date of filing: 26.09.2006
(51) Int. Cl.: B41F 17/00, G05D 24/00

(54) **Colorant presentation for pad printing**
Zuführen von Farbe für Tampondruck
Alimentation d'encre pour impression au tampon

(30) Priority: 27.09.2005 US 236131
(43) Date of publication of application: 02.05.2007
(73) Proprietor: Johnson and Johnson Vision Care, Inc., Jacksonville, FL 32256 (US)
(72) Inventor: Widman, Michael F., Jacksonville Florida 32223 (US); Ryan, Joseph, Rhebough Limerick (IE); Fleming, Aiden, Tuam Limerick (IE); Powell, P. Mark, Jacksonville Florida 32258 (US)
(74) Representative: Fisher, Adrian John

(56) References cited:
- EP-A- 1 433 604
- EP-A- 1 561 581
- FR-A1- 2 408 120
- US-A1- 4 735 227
- US-A1- 5 419 247

## Description

### FIELD OF THE INVENTION

The invention relates to devices for controlling the presentation of colorants to a pad for pad printing. In particular, the present invention provides apparatus and methods for controlling the viscosity and circulation of colorants used in pad printing systems.

### BACKGROUND OF THE INVENTION

Methods and systems for pad printing are well known in the industry. Generally, a colorant is presented to a printing pad which has been pre-formed into a desired pattern or shape. The pad is used to imprint a designated article with the colorant which has been presented to it. The process is highly repeatable, as additional colorant can be presented to the printing pad and additional imprints made on articles.

In one particular application, colorants and pad printing are used in the manufacturing of tinted contact lenses. In some methods of manufacturing tinted contact lenses, colorant is applied to uncured lens material by transfer of the colorant from a mold surface to the lens material and the latter is subsequently cured. Colorant transfer can be carried out using a printing pad containing a colorant composition that is pressed against the mold surface of an ophthalmic lens mold. The colorant composition, which generally includes a binding polymer and pigments, as well as a solvent component, is applied to a mold part and allowed to dry. Deposition of a contact lens monomer into the mold part and curing of the monomer incorporates the colorant onto the lens.

In the process of pad printing contact lens molds using closed cups, it is desirable to maintain colorant viscosity or solvent/solid ratio throughout the period of time that a given colorant is being employed. Typically, evaporation of solvent from the thin film left on the unetched portion of the cliché that is used in the pad printing process reduces the solvent to solids ratio in the colorant contained in the closed cup. A reduction in the solvent to solids ratio in the colorant typically increases colorant viscosity and ultimately leads to poor printing performance. Solvent is typically present in the colorant to aid in the transfer of the colorant from the cliché to the printing pad, and then from the printing pad to the front curve lens mold. The colorant is designed to permit evaporation of a portion of the solvent to increase tackiness of the colorant on the cliché, or print head, to enable this transfer to the printing pad. The type of solvent, type of colorant, temperature, humidity, air velocity, type of pad material, and type of print pattern are some of the factors that influence a desired level of solvent or viscosity needed to optimize printing performance; additional factors can include printer speed and cycle time.

In some processes, it is necessary to stop the printing process when the ability of the colorant to fill the cliché etches is compromised due to a diminished height of the colorant in the cup as it goes below a critical level. Changing out of cups and manual preparation of colorant with the correct solvent ratio can be difficult and can exposes a technician to solvents.

Other known processes, such as those described in Patent Application US 2008/0131596, describe methods and apparatus to recirculate colorant between a colorant reservoir and a colorant cup. The viscosity in the reservoir was measured with a spindle measurement and solvent or colorant was added by a technician to maintain a desired viscosity, based upon the spindle measurement. As effective as such systems were, conditions of erratic viscosity measurements could sometimes arise and the need for technician intervention would diminish manufacturing time for a line. For example, a viscosity measurement taken with a spindle measurement can fluctuate as the colorant level falls to within 30mm to 50mm of the bottom of the reservoir and a vortex is created around the spindle. In addition, the viscosity of colorant may vary based upon variations of the ambient temperature around the colorant reservoir.

Document EP 1 561 581 also discloses an ink supply system with viscosity control.

Therefore, it is desirable to provide improved colorant management system that provides colorant to a printing cliché and cup.

### SUMMARY OF THE INVENTION

Accordingly, the present invention teaches improved apparatus and methods for providing colorant to a printing cup that circulates colorant under pressure from a colorant container to a printing cliché and cup, in addition, the present invention applies negative atmospheric pressure within the cup to facilitate the circulation of ink from the cup back to the colorant container and also monitors the viscosity of the colorant actually being delivered to the printing cup. The methods and systems of the present invention also provide for the automatic control of the viscosity of the colorant in feed conduits feeding the print cup, based upon the viscosity monitoring of the colorant within the feed lines. Other apparatus and methods are also described herein in the following specification and claims and in the accompanying drawings.

### BRIEF DESCRIPTION OF THE DRAWINGS

**FIG. 1** illustrates components included in some embodiments of a colorant presentation system according to the present invention.
**FIG. 2** illustrates some dual cup embodiments of the present invention.
**FIG. 3** illustrates method steps of some embodiments of the present invention.
**FIG. 4** illustrate additional method steps that can be included in some embodiments of the present invention.

### DETAILED DESCRIPTION

### Overview

The present invention is directed to systems and methods for providing a colorant, such as an ink solution, to a print cup and print cliché used in conjunction with pad printing. According to the present invention, a self contained cart includes a colorant supply, inline viscometers, a solvent supply, an automatic solvent dispenser, and a mixer to mix solvent and colorant. The cart can be transported on casters to a printing station so that feed and return lines can be quickly connected to the printing station wherein a printing operation does not need to be halted in order to replenish an ink supply. The inline viscometers and solvent dispenser automatically maintains the colorant at a desired viscosity.

In some preferred embodiments of the present invention, there is provided a method of circulating colorant in a pad printing system, including sealing a colorant cup 8 adjacent to the cliche 9, the cup containing colorant, and the cup 8 containing air disposed above the colorant, wherein the air is capable of entering the cup 8 around the circumference of the cup 8. This embodiment includes controlling the viscosity of the colorant in a colorant container 1-2 based upon an indication of the viscosity determined by an inline viscometer. In addition, the present invention can include pumping colorant from the colorant container 1-2 to the cup 8 and pumping colorant and air residing within the cup 8 to the colorant container 1-2.

### Systems

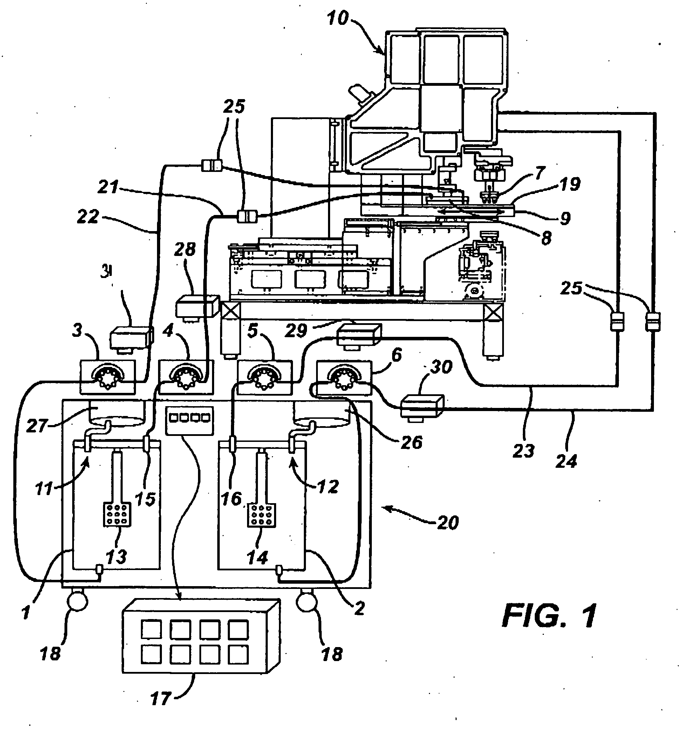

Referring to Fig. 1, an illustration of some embodiments of the present invention is provided. According to the present invention, a colorant container 1-2 is mounted in a support apparatus 20, such as a cart. The colorant container 1-2 can include, for example, a manufacturer's canister, identified via a bar code or other machine or human readable marking that provides a lot number or other identifier of a colorant lot. In some embodiments, the cart 20 can support multiple colorant canisters 1-2, with each canister 1-2 acting as a reservoir for the same or different colored ink. Multiple canisters 1-2 with the same color ink can increase the volume capacity available to the printing station 10, while canisters 1-2 with different color inks will provide increased color selection to the printing station 10

The cart 20 can include a mobility means 18, such as casters or wheels for ease for transportation to and from a printing station 10. Conduits 21-24, such as flexible tubing, can provide fluid communication to convey colorant from the canister 1-2 to the printing station 10 and also from the printing station 10 to the canister 1-2. In some embodiments, the conduits 21-24 can include apparatus 25 for connecting and disconnecting the fluid communication , such as quick disconnect fittings or other well known tubing hardware which thereby facilitates changing out a cart 20 for a cart 20 with replenished colorant containers 1-2. A new cart 20 can be connected via new conduits 21-24 in order to provide fluid communication to the fresh supply of colorant in replenished canisters 1-2.

One or more pumps, such as, for example one or more peristaltic pumps 3-6 are used to transport the colorant between the container 1-2 and the printer station 10. The peristaltic pumps 3-6 can also be supported by the support structure 20. In some embodiments, a pump 3,6 is located proximate to each of the feed conduits 22,24 such that the pump 3,6 can act to pump the colorant from the colorant reservoir container 1-2 to the print station 10. Embodiments can also include one or more pumps 4,5 proximate to the return conduits 21,23 such that the pumps 4,5 can act to pump colorant from the print station back to the colorant container 1-2.

According to the present invention, an inline viscometer 18-31 is utilized to measure the viscosity of the colorant. In some preferred embodiments, an inline viscometer 30,31 measures the viscosity of colorant being supplied to an ink station 10 via a feed conduit 22,24. In other preferred embodiments, an inline viscometer 28,29 measures the viscosity of colorant returning from the printing station 10. Still other embodiments can include inline viscometers 28-31 which measure both the viscosity of the colorant being provided from the canisters 1-2 to the printing station 10 and returning from the printing station 10 to the canisters 1-2.

The present invention also includes a controller 17 which receives an indication of the viscosity of the colorant. In some embodiments, the controller 17 is operatively connected to the viscometer 28-31 to receive a digital signal that includes a viscosity reading of the colorant. Embodiments can also include a display connected to the controller which provides a human readable indication of the viscosity measured by the inline viscometer 27-30.

A solvent dispenser 26-27 can be situated on the support structure 20, such as, for example, above or adjacent to the colorant container 1-2. The solvent dispenser can include any known design for dispensing liquids, such as solvents, with an automatic controller 17. The solvent dispenser is connected in operative communication with the controller so that the controller can cause the solvent dispenser 26-27 to dispense solvent into the colorant in the colorant container 1-2. In some embodiments, the controller 17 will cause the solvent dispenser 26-27 to dispense solvent into the colorant based upon an indication of the viscosity of the colorant, received from the inline viscometer 28-31.

The controller 17 can be programmed, for example, to have an upper viscosity threshold. If a reading received from the inline viscometer 28-31 indicates that the viscosity of the colorant in a conduit 21-24 is above the upper viscosity threshold, the controller 17 can communicate with the solvent dispenser to cause the solvent dispenser 26-27 to dispense solvent into the colorant container 1-2. In some embodiments, an amount of solvent dispensed will be based upon how far above the threshold the indication of the viscosity is. Some embodiments can also include a colorant dispenser (not shown) that dispenses colorant in response to an indication from the inline viscometer 28-31 which indicates that the viscosity of the colorant is below a minimum threshold. The present invention therefore is capable of providing an indication of the viscosity of colorant actually being presented to the cliché 9 and printing cup 8 which is an improvement over prior art methods that measured the viscosity of ink in a reservoir.

In addition, the present invention can provide a more accurate indication of the viscosity of the colorant through the use of the inline viscometers which measure how fast a piston travel through the colorant as compared to the prior art which measured the current required by an electric motor used to turn a paddle missing the colorant. According to the prior art, the current may vary due to the viscosity of the colorant, but also may vary according to the amount of colorant into which the paddle was submerged or partially submerged.

In the present invention, a paddle 13-14 may be used to stir the colorant and mix the solvent and the colorant.

Referring now again to Fig. 1, colorant can be pulled from the bottom of colorant container 1-2 by colorant feed pump 3,6 via feed conduit 22,24. In some embodiments, the outlet of the feed conduit 22,24 can be about 1 to 2 millimeters from the surface 19 of the cliché 9. Colorant fills the ink cup 8 until it reaches the inlet of return conduit 21, 23. The end of the extension return conduit, can be, for example, about 3 to 5 millimeters from the roof of ink cup 8.

According to some embodiments of the present invention, a return pump 4,5 can provide negative atmospheric pressure within the ink cup 8 thereby facilitating the return of unused colorant from the colorant cup 8 to the colorant container 1-2. The return conduits 21, 23 can include quick disconnects 25 to facilitate expedient connection and disconnection of the return conduits when, for example, a cart comprising the support structure 20 is swapped out to replenish the supply of colorant.

Some embodiments can include a return pump 4,5 that is a peristaltic pump of increased pumping capabilities as compared to the feed pump 3,6, in order to better maintain a negative atmospheric pressure within the printing cup 8. For example, if the feed pump 3,6 is designed to operate at 30 rpm, the return pump 4,5 may be designed to operate at 60 rpm in order to create the pressure differential. In addition, some embodiments can include a larger diameter tubing for the return conduit 21,23 than the tubing utilized for feed conduit 22,24.

Not wishing to be bound by a particular theory of operation, it is believed that freshly adjusted (solvent/viscosity) colorant is preferably deposited on the cliché etches on every stroke of the cliché. In this regard, it is desirable to feed fresh colorant via the front of the cup relative to the motion of the cliché holder and to return the colorant at the relative back position. The colorant can be picked up by the print pads 7 immediately after the cliché holder has moved to expose an area of the cliché 9 to the print pad 7. The relative locations of the inlet and outlet also encourage a non-stagnation of colorant in the cup.

In another aspect of some embodiments of the present invention, while removing the colorant cup 8, such as for repair or to change a colorant color, the colorant cup 8 can be more easily emptied by reversing the feed pump 3,6 (or by reversing the direction of the tubing through the peristaltic rollers). After empty the colorant cup 8 by operation of the reversed action feed pump 3,6, any remaining level of colorant within the cup 8 is diminished, which in turn facilitates cleanup.

The systems of the present invention typically include a colorant cup 8 having an interior roof portion, and an air gap beneath the roof portion, the colorant cup 8 being disposed adjacent to a cliché. As used herein, the term "colorant cup" refers to an "ink cup" that is known in the pad printing arts. Suitable colorant cups 8 used in the present invention can include any of a number of colorant cups 8 known to those skilled in the art, such as, for example, closed ink cups.

The chiché 9 can also include any clichés known in the pad printing art and will include, for example a surface with etches functional to hold the liquid colorant in a particular etch pattern. The surface etches can have any pattern. Typically, the pattern will be specific to a particular application, such as, for example, a pattern simulating an iris which can be printed on a contact lens. The cup 8 is held against and drawn across the cliché surface to deposit colorant within the surface etches. One or more print pads 7 contact the cliché 9 to transfer the colorant pattern to the print pads 7. The pattern is subsequently transferred to an article to be printed on, such as, for example, a contact lens front curve lens mold or a gold ball, or an automobile dashboard.

In some embodiments, a cup 8 used in the present invention can include a vent, an interior roof portion, and an air gap beneath the roof portion. The vent is provided as a small hole or channel that pierces the roof of the cup. The vent permits the surrounding gas external to the cup to enter to the interior of the cup to provide an air gap. Typically, the surrounding gas is air, although any number of other gases, such as an inert gas like nitrogen, can be used. Because the density of air is lower than the density of colorant, the air gap will generally be situated above the colorant and below the interior roof portion of the cup. The surrounding gas is capable of entering the cup through the vent as the colorant is drawn out of the cup. The vent, accordingly, provides that the pressure within the cup is substantially the same as the pressure of the surrounding gas.

In other embodiments, a vent is not included in the cup 8 and surrounding air is drawn in around the perimeter rim of the cup 8.

Suitable cups 8 typically include an inlet and an outlet for circulating the colorant into and out of the cup, respectively. In some typical embodiments, a suitable inlet is provided in the cup 8 as an orifice that is in fluid communication with both the feed conduit 22,24 and with the colorant disposed on the cliché. This orifice typically remains submerged in the colorant that is disposed on the cliché 9 during operation of the system. The orifice of the feed conduit 22,24 is suitably disposed about 1 to about 2 millimeters above the cliché 9.

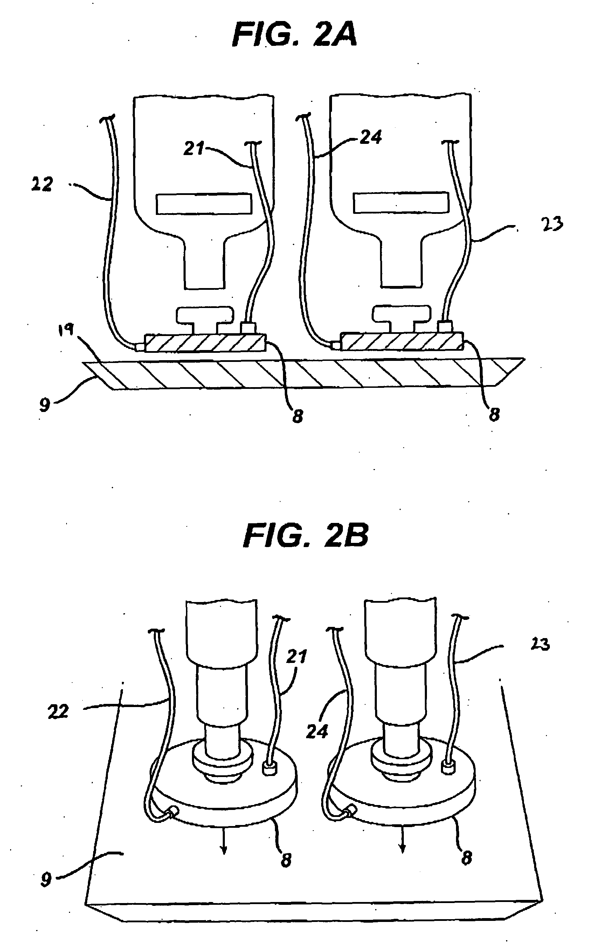

Referring now to Fig. 2, in some embodiments a colorant cup apparatus 8 can include two or more colorant cups 8 adjacent to each other. The two or more cups 8 can be located adjacent to each other and be used to cover a wider swath of the cliché. In addition, use of multiple smaller diameter colorant cups 8 allows for a shorter stroke by a mechanism than a single large diameter cup 8 while still covering a cliché surface with colorant.

In addition to enabling feeding of fresh colorant directly to the surface of the cliché 9, the proximity of the orifice to the cliché 9 surface also enables the ready removal of most colorant from the cup 8 during maintenance and shut down operations, *e*.*g*., by operation of a feed pump 3,6 in the opposite direction to remove colorant from the cup 8. A suitable outlet in the cup 8 can therefore include, for example, an orifice that is in fluid communication with the return conduit 21,23 and, optionally, that is in fluid communication with colorant that is disposed on the cliché. The cup 8 typically includes a terminal portion of the return conduit 21,23 that is disposed below the interior roof portion of the cup to allow for the air gap. In some embodiments, the terminal portion of the return conduit 21,23 is disposed about 3 to about 5 millimeters below the interior roof portion of the cup.

Suitable feed conduits of the present invention are capable of providing fluid communication of colorant between the reservoir and cup. Fluid communication can be provided, for example, by connecting one end of the feed conduit to the colorant container 1-2 and the opposite end to the cup 8. The feed conduit 22,24 can be connected to almost any part of the colorant container 1-2 that is in contact with the colorant, for example at an opening in the wall of the colorant container 1-2 or by utilization of a feed tube submerged in the colorant in the colorant container 1-2, or both. Preferably, the feed conduit is connected to the bottom of the colorant container 1-2. Suitable feed conduits can be constructed of any material that is capable of transferring colorant. In some embodiments, colorant used in the present invention may contain organic solvents, and as such the materials of construction of the feed conduit should be compatible with organic solvents contained within the colorant.

Typically, the conduits used in the present invention are fashioned from plastic tubing, peristaltic pump tubing such as the Pharmed^{™} brand, and stainless steel for extension tube fittings extending into the cup.

In some embodiments of the present invention the transfer rate in the return conduits 21, 23 is higher than the transfer rate in the feed conduit 22,24. In some embodiments, a higher transfer rate in the return conduit is provided by using similar diameter conduit and variable speed pumps 3-6. In other embodiments, similar speed pumps 3-6 are used and a higher transfer rate in the return conduit 21,23 is provided by the use of a return conduit 21,23 in which a majority of the return conduit 21,23 has a cross sectional area that is larger than the cross sectional area of a majority of the feed conduit 22,24. In still other embodiments, similar speed pumps 3-6 are used and a majority of the return conduit 21,23 has a cross section area that is at least about twice as large as that of a majority of the feed conduit 22,24.

### Methods

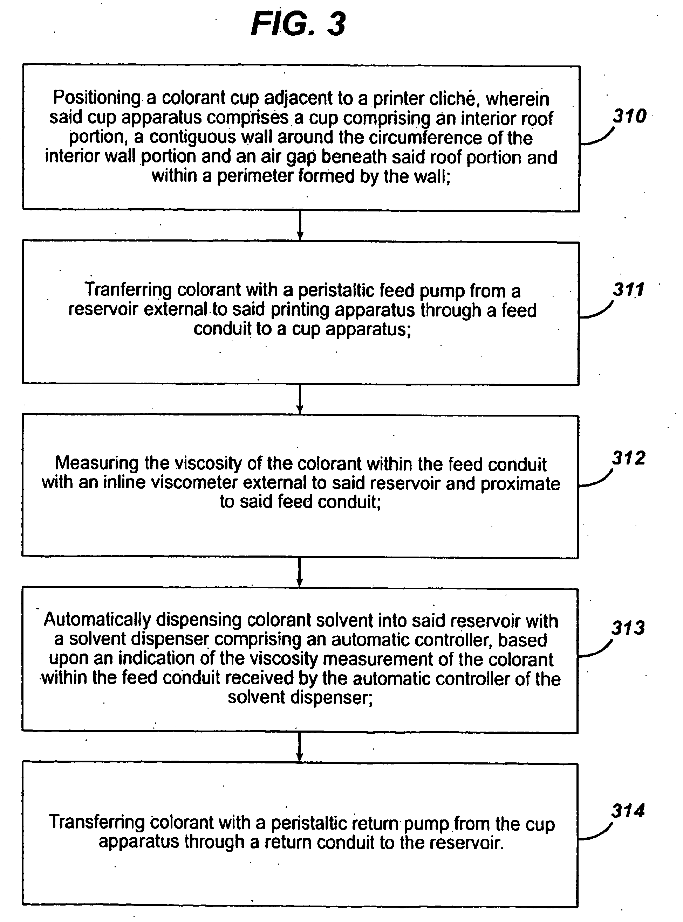

Referring now to Fig. 3, the methods in which colorants are transferred from the colorant container 1-2 to the colorant cup 8 in the present invention can include at 310 positioning a colorant cup 8 adjacent to a printer cliché 9. The cup apparatus 8 can include a cup with an interior roof portion, a contiguous wall around the circumference of the interior wall portion and an air gap beneath the roof portion and within a perimeter formed by the wall. At 311, colorant can be transferred with a peristaltic feed pump 3,6 from a colorant container 1-2, or other reservoir, external to the printing apparatus and through a feed conduit 22,24 to a cup apparatus 8. At 312, the viscosity of the colorant within the feed conduit 22,24 can be measured with an inline viscometer 30,31 external to colorant container 1-2 and proximate to the feed conduit 22, 24. At 313, colorant solvent can be automatically dispensed into the colorant container 1-2 with a solvent dispenser 26-27 that includes an automatic controller 17, based upon an indication of the viscosity measurement of the colorant within the feed conduit received by the automatic controller. At 314, colorant can be transferred with a peristaltic return pump 4,5 from the cup apparatus through a return conduit 21, 23 to the colorant container 1-2.

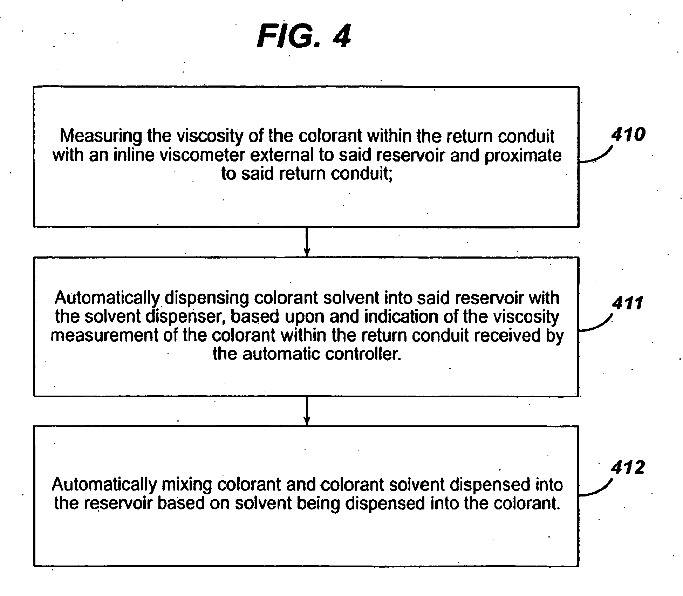

Referring now to Fig. 4, in some embodiments, additional steps that can be included while practicing the present invention can include, at 410 measuring the viscosity of the colorant within the return conduit 21, 23 with an inline viscometer 28, 29 external to the colorant container 1-2 and proximate to the return conduit 21, 23. At 411, colorant solvent can be automatically dispensed into the colorant container 1-2 with the solvent dispenser 26-27, based upon an indication of the viscosity measurement of the colorant within the return conduit 21, 23 received by the automatic controller 17.

In some embodiments, in which colorant transfer rates through the feed conduits 22, 24 and the return conduits 21, 23 have reached a steady state condition, the colorant residing within the cup 8, can be maintained at an essentially constant level. An essentially constant colorant level is typically determined by the position above the cliché of a terminal portion of the return conduit, also referred to as the orifice of the return conduit. In embodiments where an air gap is provide beneath the inner roof portion of the cup 8, the terminal portion of the return conduit21, 23, *e*.*g*., the orifice, can be any height as long as it is higher than the terminal portion of the feed conduit 22,24 within the cup 8.

During operation in certain embodiments of the present invention, the system typically includes a print pad 7 that is positioned adjacent to the colorant cup 8. In these embodiments, it is preferred to expose the cliché etches to fresh colorant from the inlet conduit on every stroke of the cliché. In this regard, colorant is preferably transferred into a first portion of the cup and out of a second portion of the cup, wherein the first portion is located closer to the print pad than the second portion.

In other embodiments of the present invention, it is also desirable that the colorant is transferred using pumping methods that minimize the formation of particles and contaminants in the colorant. In this regard, it is desirable that the colorant is transferred peristaltically to the colorant cup 8, or to the colorant container, or to both, *e*.*g*., such as by use of one or more peristaltic pumps 3-6 as described herein above.

The present invention also provides methods of circulating colorants in a pad printing system that includes different transfer rates of the colorant to and from the colorant cup. In this aspect of the invention, the different transfer rates help to reduce colorant leaking out of the cup and onto the cliché. Accordingly, in another aspect of the present invention, there are provided methods that include sealing a cup adjacent to a cliché, the cup containing colorant; controlling the viscosity of the colorant in a colorant container; transferring colorant from the colorant container 1-2 to the cup 8. In these embodiments, the colorant residing within the cup 8 is transferred to the colorant container 1-2 using a faster effective transfer rate compared to the rate that colorant from the colorant container 1-2 is effectively transferred to the cup 8. In the methods disclosed herein, the colorant cup 8 optionally contains a vent, and optionally contains an air gap. As used herein, the term "effective transfer rate" refers to that rate at which colorant would be transferred in an unimpeded open system, e.g., where a vent is present in the cup and an excess of colorant is available to enter the return conduit. In embodiments lacking a vent, an air gap, or both, the transfer of the colorant in the return conduit is impeded by the slower rate of colorant provided to the cup by the feed conduit. In these embodiments, a negative pressure inside the cup typically results by action of the higher effective transfer rate in the return conduit compared to the feed conduit. Accordingly, the methods disclosed herein are capable of operating at slightly reduced pressures compared to ambient pressure, which typically occurs when the cup remains filled with colorant.

A number of embodiments of the present invention have been described. Nevertheless, it will be understood that various modifications may be made without departing from the scope of the invention as defined by the following claims.

## Claims

1. A system for presenting colorant with a controlled viscosity to a colorant cup apparatus (8) that is adjacent to a pad printing cliché (9) for use in pad printing, said system comprising:
a colorant cup apparatus (8) that is for being positioned adjacent to a pad printing cliché (9);
a colorant container (1, 2) comprising colorant;
a feed conduit (22, 24) in fluid communication with said colorant container (1, 2) and said cup apparatus (8);
a solvent dispenser (26, 27) comprising colorant solvent in fluid communication with said colorant container (1, 2);
a return conduit (21, 23) in fluid communication between said cup apparatus (8) and said colorant container (1,2); and
a viscometer (30, 31);
**characterised in that** the viscometer is an inline viscometer (30, 31) external to said colorant container (1, 2) and proximate to said feed conduit (22, 24) to measure the viscosity of colorant within the feed conduit (22, 24);
and the system further comprises a control mechanism (17) operative to dispense the colorant solvent into said colorant container (1, 2) with said solvent dispenser (26, 27), based upon a viscosity measurement performed by the inline viscometer (30, 31) proximate to said feed conduit (22, 24).

2. The system of claim 1, additionally comprising a second inline viscometer (28, 29) external to said colorant container (1, 2) and proximate to said return conduit (21, 23) to measure the viscosity of colorant within the return conduit (21, 23).

3. The system of claim 2, wherein said control mechanism (17) is additionally operative to dispense the colorant solvent into said colorant container (1, 2) with said solvent dispenser (26, 27), based upon a viscosity measurement performed by the second inline viscometer (28, 29) proximate to said return conduit (21, 23).

4. The system of claim 2 or claim 3, additionally comprising a display operative to indicate the viscosity of the solvent based upon a viscosity measurement performed by at least one of: said inline viscometer (30, 31) proximate to said feed conduit (22, 24) and said second inline viscometer (28, 29) external to said colorant container (1, 2) and proximate to said return conduit (21, 23).

5. The system of any one of the preceding claims, additionally comprising a display operative to indicate the viscosity of the solvent based upon a viscosity measurement performed by said inline viscometer (30, 31) proximate to said feed conduit (22, 24).

6. The system of any one of the preceding claims, wherein the cup apparatus (8) comprises multiple colorant cups each colorant cup comprising an essentially circular wall, an interior roof portion capping said wall and an air gap beneath said roof portion, wherein said feed conduit (22, 24) is in fluid communication with each colorant cup and said return conduit (21, 23) is also in fluid communication with each of said colorant cups.

7. The system of claim 6, further comprising a pad printing cliché (9), wherein said multiple cups comprise two cups in an essentially planar position proximate to said printing cliché (9).

8. The system of any one of the preceding claims, additionally comprising a printing station (10) for printing on items, the printing station (10) comprising a pad printing cliché (9) and the cup apparatus (8), the cup apparatus (8) being adjacent to the pad printing cliché (9);
wherein the colorant container (1, 2) comprises a container comprising an indication of a colorant manufacturing lot which can be associated with particular items printed on at the printing station (10).

9. The system of any one of the preceding claims, additionally comprising a mixer (13, 14) positioned to mix colorant within the colorant container (1,2).

10. The system of claim 9, wherein the mixer (13, 14) is operational to mix colorant and solvent within said colorant container (1, 2) based upon an indication from the control mechanism (17) to dispense the colorant solvent into said colorant container (1, 2) with said solvent dispenser (26, 27).

11. The system of claim 10, wherein said mixer (13, 14) comprises a spindle driven by a motor and a paddle mounted on said spindle, wherein said paddle is positioned within the colorant container (1, 2) in fluid contact with colorant contained within the colorant container (1,2).

12. The system of any one of the preceding claims, wherein said solvent dispenser (26, 27) includes a solvent inlet valve in communication with said controller (17) for dispensing colorant solvent into the colorant based upon a signal received from said inline viscometer (28-31).

13. The system of any one of the preceding claims, additionally comprising a feed pump (3, 6) operative to transfer colorant under positive pressure from said colorant container (1, 2) to said cup apparatus (8).

14. The system of claim 13, wherein said feed pump (3, 6) includes a peristaltic pump, an impeller-type pump, a gear pump, a pump having a back-flow feature, or any combination thereof.

15. The system of claim 14, wherein said feed pump (3, 6) is a peristaltic pump proximate to said feed conduit (22,24).

16. The system of any one of the preceding claims, additionally comprising a return pump (4, 5) operative to transfer colorant from said cup apparatus (8) to said colorant container (1, 2).

17. The system of claim 16, wherein said return pump (4, 5) is additionally operative to provide a negative atmospheric pressure under said cup apparatus (8).

18. The system of claim 17, wherein said return pump (4, 5) includes a peristaltic pump, an impeller-type pump, a gear pump, a pump having a back-flow feature, or any combination thereof.

19. The system of claim 17, wherein said return pump (4, 5) is a peristaltic pump proximate to said return conduit (21,23).

20. The system of any one of claims 1 to 12, additionally comprising a peristaltic feed pump (3, 6) operative to transfer colorant under positive pressure from said colorant container (1, 2) to said cup apparatus (8) and a peristaltic return pump (4, 5) operative to transfer colorant from said cup apparatus (8) to said colorant container (1, 2).

21. The system of any one of claims 13 to 20, when dependent upon claim 13, additionally comprising a support apparatus (20) mounted on casters (18) to facilitate mobility of the support apparatus (20) and items attached or supported by the support apparatus (20), wherein said: colorant container (1, 2), feed pump (3, 6), inline feed viscometer (30, 31), feed conduit (22, 24), return conduit (21, 23) and control mechanism (17) are all supported by the support apparatus (20).

22. The system of claim 21, additionally comprising a conduit coupler (25) inline on the feed conduit (22, 24) operative to disconnect a first portion of the feed conduit (22, 24) supported by the support apparatus (20) from a second portion of the feed conduit (22, 24) attached to the cup apparatus (8) and a conduit coupler (25) inline on the return conduit (21, 23) operative to disconnect a first portion of the return conduit (21, 23) supported by the support apparatus (20) from a second portion of the return conduit (21, 23) attached to the cup apparatus (8).

23. The system of any one of the preceding claims, additionally comprising a temperature control apparatus for maintaining the temperature of the colorant in the colorant container (1,2) between an upper threshold temperature and a lower threshold temperature.

24. The system of any one of the preceding claims, wherein a majority of the return conduit (21, 23) has a cross sectional area that is larger than that of a majority of the feed conduit (22, 24).

25. The system of any one of the preceding claim, wherein said inline viscometer (28-31) comprises:
a chamber with a first end and a second end for containing colorant;
a first electrical coil position around the first end of the chamber and a second electrical coil positioned around the second end of the chamber; and
a piston within the chamber and operative to move from one side of the chamber to the other side of the chamber based upon an electrical charge in one or both of the first electrical coil and the second electrical coil.

26. The system of claim 25 additionally comprising a viscometer temperature sensor operative to measure the temperature of the colorant within the viscometer (28-31).

27. A method of providing colorant with a controlled viscosity to a printing apparatus (10) for use in pad printing, the method comprising:
positioning a colorant cup apparatus (8) adjacent to a printer cliché (9), wherein said cup apparatus (8) comprises a cup comprising an interior roof portion, a contiguous wall around the circumference of the interior wall portion and an air gap beneath said roof portion and within a perimeter formed by the wall;
transferring colorant with a peristaltic feed pump (3, 6) from a colorant containcr (1, 2) external to said printing apparatus through a feed conduit (22, 24) to a cup apparatus (8);
measuring the viscosity of the colorant within the feed conduit (22, 24) with an inline viscometer (30, 31) external to said colorant container (1, 2) and proximate to said feed conduit (22, 24);
automatically dispensing colorant solvent into said colorant container (1, 2) with a solvent dispenser (26, 27) comprising an automatic controller (17), based upon an indication of the viscosity measurement of the colorant within the feed conduit (22, 24) received by the automatic controller (17) of the solvent dispenser (26, 27); and
transferring colorant with a peristaltic return pump (4, 5) from the cup apparatus (8) through a return conduit (21, 23) to the colorant container (1, 2).

28. The method of claim 27, wherein the transferring of colorant with a peristaltic return pump (4, 5) from the cup apparatus (8) through a return conduit (21, 23) to the colorant container (1, 2) creates negative atmospheric pressure within the air gap.

29. The method of claim 27 or claim 28, wherein colorant solvent is automatically dispensed if the viscosity measurement indicates that the viscosity of the colorant within the feed conduit (22, 24) exceeds a predetermined threshold.

30. The method of any one of claims 27 to 29, wherein colorant and air residing within said cup are transferred to said colorant container (1, 2) at a higher rate compared to the rate at which the colorant is transferred from said colorant container (1, 2) to said cup.

31. The method of claim 30, wherein colorant and air residing within the cup are transferred to said colorant container (1, 2) at least about twice the rate at which the colorant is transferred from said colorant container (1, 2) to said cup.

32. The method of any one of claims 27 to 31, wherein the printing apparatus (10) comprises a print pad (7) that is positioned adjacent said cup and colorant is transferred into a first portion of said cup and out of a second portion of said cup, said first portion being located closer to said print pad (7) than said second portion.

33. The method of any one of claims 27 to 32, additionally comprising the step of:
measuring the viscosity of the colorant within the return conduit (21, 23) with an inline viscometer (28, 29) external to said colorant container (1, 2) and proximate to said return conduit (21, 23); and
automatically dispensing colorant solvent into said colorant container (1,2) with the solvent dispenser (26; 27), based upon an indication of the viscosity measurement of the colorant within the return conduit (21, 23) received by the automatic controller (17).

34. The method of any one of claims 27 to 33, additionally comprising the step of automatically mixing colorant and colorant solvent dispensed into the colorant container (1, 2) based on solvent being dispensed into the colorant.

35. The method of claim 34, wherein the mixing step is carried out with a paddle (13, 14) driven by a motor, and wherein said paddle (13, 14) is mounted on a spindle and positioned within the colorant container (1, 2).

36. The method of any one of claims 27 to 35, wherein said peristaltic pump (3-6) is capable of operating in a non-positive displacement mode.

## Patentansprüche

1. System zum Einbringen eines Farbstoffes mit einer kontrollierten Viskosität in eine Farbstoffnapf-Vorrichtung (8), die sich benachbart einem Tampondruckklischee (9) zur Verwendung beim Tampondruck befindet, wobei das System aufweist:
eine Farbstoffnapf-Vorrichtung (8), die dazu gedacht ist, benachbart einem Tampondruckklischee (9) angeordnet zu werden,
einen Farbstoff-Behälter (1, 2), der Farbstoff aufweist;
eine Zuführleitung (22, 24) in fluidischer Verbindung mit dem Farbstoff-Behälter (1, 2) und der Napf-Vorrichtung (8);
eine Ausgabeeinheit (26, 27) für Lösemittel, die Lösemittel für Farbstoff in fluidischer Verbindung mit dem Farbstoff-Behälter (1, 2) beinhaltet; und
eine Rückführleitung (21, 23) in fluidischer Verbindung mit der Napf-Vorrichtung (8) und dem Farbstoff-Behälter (1, 2); und
ein Viskometer (30, 31);
**dadurch gekennzeichnet, dass** das Viskometer ein Inline-Viskometer (30, 31) außerhalb des Farbstoff-Behälters (1, 2) und unmittelbar bei der Zuführleitung (22, 24) ist, um die Viskosität des Farbstoffes innerhalb des Zuführleitung (22, 24) zu messen; und dass das System einen Steuermechanismus (17) aufweist, der so arbeitet, dass er das Lösemittel für Farbstoff in den Farbstoff-Behälter (1, 2) mit der Ausgabeeinheit (26, 27) für Lösemittel basierend auf einer Viskositätsmessung, die von dem Inline-Viskometer (30, 31) unmittelbar bei der Zuführleitung (22, 24) durchgeführt wird, ausgibt.

2. System nach Anspruch 1, das zusätzlich ein zweites Inline-Viskometer (28, 29) außerhalb des Farbstoff-Behälters (1, 2) und unmittelbar bei der Rückführleitung (21, 23) aufweist, um die Viskosität des Farbstoffes innerhalb der Rückführleitung (21, 23) zu messen.

3. System nach Anspruch 2, bei dem der Steuermechanismus (17) zusätzlich so arbeitet, dass er das Lösemittel für Farbstoff in den Farbstoff-Behälter (1, 2) mit der Ausgabeeinheit (26, 27) für Lösemittel, basierend auf einer Viskositätsmessung, die von dem zweiten Inline-Viskometer (28, 29) unmittelbar bei der Rückführleitung (21, 23) durchgeführt wird, ausgibt.

4. System nach Anspruch 2 oder Anspruch 3, das weiter eine Anzeige aufweist, die so betrieben wird, dass sie die Viskosität des Lösemittels basierend auf einer Viskositätsmessung angibt, die wenigstens durch entweder das Inline-Viskometer (30, 31) unmittelbar bei der Zuführleitung (22, 24) oder das zweite Inline-Viskometer (28, 29) außerhalb des Farbstoff-Behälters (1, 2) und unmittelbar bei der Rückführleitung (21, 23) durchgeführt wird.

5. System nach einem der vorangehenden Ansprüche, das zusätzlich eine Anzeige aufweist, die so arbeitet, dass sie die Viskosität des Lösemittels basierend auf einer Viskositätsmessung angibt, die von dem Inline-Viskometer (30, 31) unmittelbar bei der Zuführleitung (22, 24) ausgeführt wird.

6. System nach einem der vorangehenden Ansprüche, bei dem die Napf-Vorrichtung (28) mehrere Farbstoffnäpfe aufweist, wobei jeder Farbstoffnapf eine im Wesentlichen kreisförmige Wand, einen inneren Dachabschnitt, der die Wand abdeckt, und einen Luftspalt unterhalb des Dachabschnittes aufweist, wobei die Zuführleitung (22, 24) in fluidischer Verbindung mit jedem Farbstoffnapf ist und die Rückführleitung (21, 23) auch in fluidischer Verbindung mit jedem der Farbstoffnäpfe ist.

7. System nach Anspruch 6, das weiter ein Tampondruckklischee (9) aufweist, wobei die mehreren Näpfe zwei Näpfe in einer im Wesentlichen planaren Anordnung unmittelbar bei dem Druckklischee (9) aufweisen.

8. System nach einem der vorangehenden Ansprüche, das zusätzlich eine Druckstation (10) zum Drucken auf Gegenstände aufweist, wobei die Druckstation (10) ein Tampondruckklischee (9) und die Napf-Vorrichtung (8) aufweist, wobei die Napf-Vorrichtung (8) benachbart dem Tampondruckklischee (9) liegt;
wobei der Farbstoff-Behälter (1, 2) einen Behälter aufweist, der eine Angabe über ein Farbstoff-Herstellungslos enthält, die mit bestimmten Gegenständen, die an der Druckstation (10) bedruckt werden, verknüpft werden kann.

9. System nach einem der vorangehenden Ansprüche, das zusätzlich einen Mischer (13, 14) aufweist, der so angeordnet ist, dass er Farbstoff innerhalb des Farbstoff-Behälters (1, 2) mischt.

10. System nach Anspruch 9, bei dem der Mischer (13, 14) so zu betreiben ist, dass er Farbstoff und Lösemittel innerhalb des Farbstoff-Behälters (1, 2) basierend auf einer Angabe von dem Steuermechanismus (17) mischt, um das Lösemittel für Farbstoff mit der Ausgabeeinheit (26, 27) für Lösemittel in den Farbstoff-Behälter (1, 2) auszugeben.

11. System nach Anspruch 10, bei dem der Mixer (13, 14) eine Welle aufweist, die von einem Motor angetrieben wird, und eine Schaufel, die auf der Welle angebracht ist, aufweist, wobei die Schaufel innerhalb des Farbstoff-Behälters (1, 2) in Fluidkontakt mit Farbstoff, der in dem Farbstoff-Behälter (1, 2) enthalten ist, angeordnet ist.

12. System nach einem der vorangehenden Ansprüche, bei dem die Ausgabeeinheit (26, 27) für Lösemittel ein Lösemittel-Einlassventil in Kommunikationsverbindung mit dem Controller (17) zum Ausgeben von Lösemittel für Farbstoff in den Farbstoff basierend auf einem Signal, das von dem Inline-Viskometer (28-31) erhalten worden ist, umfasst.

13. System nach einem der vorangehenden Ansprüche, das zusätzlich eine Zufuhrpumpe (3, 6) aufweist, die so arbeitet, dass sie Farbstoff unter positivem Druck aus dem Farbstoff-Behälter (1, 2) in die Napf-Vorrichtung (8) überfährt.

14. System nach Anspruch 13, bei dem die Zufuhrpumpe (3, 6) eine peristaltische Pumpe, eine Pumpe vom Impeller-Typ, eine Zahnradpumpe, eine Pumpe mit einer Rückstromeigenschaft oder irgendeine Kombination aus diesen umfasst.

15. System nach Anspruch 14, bei dem die Zufuhrpumpe (3, 6) eine peristaltische Pumpe unmittelbar bei der Zuführleitung (22, 24) ist.

16. System nach einem der vorangehenden Ansprüche, das zusätzlich eine Rückführpumpe (4, 5) aufweist, die so betrieben wird, dass sie Farbstoff von der Vorrichtung (8) mit Näpfen in den Farbstoff-Behälter (1, 2) überführt.

17. System nach Anspruch 16, bei dem die Rückführpumpe (4, 5) zusätzlich so betrieben wird, dass sie für einen negativen atmosphärischen Druck unter der Vorrichtung (8) mit Näpfen sorgt.

18. System nach Anspruch 17, bei dem die Rückführpumpe (4, 5) eine peristaltische Pumpe, eine Pumpe vom Impeller-Typ, eine Zahnradpumpe, eine Pumpe mit Rückstromeigenschaften oder irgendeine Kombination aus diesen umfasst.

19. System nach Anspruch 17, bei dem die Rückführpumpe (4, 5) eine peristaltische Pumpe unmittelbar bei der Rückführleitung (21, 23) ist.

20. System nach einem der Ansprüche 1 bis 12, das zusätzlich eine peristaltische Zufuhrpumpe (3, 6), die so betrieben wird, dass sie Farbstoff unter positivem Druck aus dem Farbstoff-Behälter (1, 2) zu der Napf Vorrichtung (8) überführt, und eine peristaltische Rückführpumpe (4, 5), die so betrieben wird, dass sie Farbstoff von der Napf-Vorrichtung (8) zu dem Farbstoff-Behälter (1, 2) überführt, aufweist.

21. System nach einem der Ansprüche 13 bis 20, soweit von Anspruch 13 abhängig, das zusätzlich eine Haltevorrichtung (20) aufweist, die auf Laufrollen (18) aufgebaut ist, um die Beweglichkeit der Haltevorrichtung (20) und von Gegenständen, die an der Haltevorrichtung (20) befestigt oder von ihr gehalten werden, zu erleichtern, wobei der Farbstoff-Behälter (1, 2), die Zufuhrpumpe (3, 6), das Inline-Zuführviskometer (30, 31), die Zuführleitung (22, 24), die Rückführleitung (21, 23) und der Steuermechanismus (17) alle von der Haltevorrichtung (20) gehalten werden.

22. System nach Anspruch 21, das zusätzlich einen Leitungskoppler (25) innerhalb der Zuführleitung (22, 24), der so betrieben wird, dass er einen ersten Bereich der Zuführleitung (22, 24), die von der Haltevorrichtung (20) gehalten wird, von einem zweiten Bereich der Zuführleitung (22, 24), der an der Napf-Vorrichtung (8) befestigt ist, trennt, und einen Leitungskoppler (25) innerhalb der Rückführleitung (21, 23), der so betrieben wird, dass er einen ersten Bereich der Rückführleitung (21, 23), der von der Haltevorrichtung (20) gehalten wird, von einem zweiten Bereich der Rückführleitung (21, 23), der an der Napf-Vorrichtung (8) befestigt ist, trennt, aufweist.

23. System nach einem der vorangehenden Ansprüche, das zusätzlich eine Temperatursteuervorrichtung zum Halten der Temperatur des Farbstoffes in dem Farbstoff-Behälter (1, 2) zwischen einer oberen Grenztemperatur und einer unteren Grenztemperatur aufweist.

24. System nach einem der vorangehenden Ansprüche, bei dem ein Hauptanteil der Rückführleitung (21, 23) eine Querschnittsfläche hat, die größer ist als die eines Hauptteiles der Zuführleitung (22, 24).

25. System nach einem der vorangehenden Ansprüche, bei dem das Inline-Viskometer (28-31) aufweist:
eine Kammer mit einem ersten Ende und einem zweiten Ende, die einen Farbstoff enthält;
eine erste elektrische Spule, die um das erste Ende der Kammer gelegt ist, und eine zweite elektrische Spule, die um das zweite Ende der Kammer gelegt ist; und
einen Kolben innerhalb der Kammer und so betrieben, dass er sich von einer Seite der Kammer zu der anderen Seite der Kammer bewegt, basierend auf einer elektrischen Ladung in der ersten elektrischen Spule oder der zweiten elektrischen Spule oder in beiden.

26. System nach Anspruch 25, das zusätzlich einen Temperatursensor für das Viskometer aufweist, der so betrieben wird, dass er die Temperatur des Farbstoffes innerhalb des Viskometers (28-31) misst.

27. Verfahren zum Bereitstellen von Farbstoff mit einer kontrollierten Viskosität für eine Druckvorrichtung (10) zur Verwendung beim Tampondruck, wobei das Verfahren aufweist:
Anordnen einer Farbstoffnapf-Vorrichtung (8) benachbart einem Druckerklischee (9), wobei die Napf-Vorrichtung (8) einen Napf aufweist, der einen inneren Dachbereich, eine ununterbrochene Wand um den Umfang des inneren Wandbereichs und einen Luftspalt unterhalb des Dachbereichs und innerhalb eines Umfangsbereiches, der durch die Wand gebildet ist, aufweist;
Überführen von Farbstoff mit einer peristaltischen Zufuhrpumpe (3, 6) von einem Farbstoff-Behälter (1, 2) außerhalb der Druckvorrichtung durch eine Zuführleitung (22, 24) zu einer Napf-Vorrichtung (8);
Messen der Viskosität des Farbstoffes innerhalb der Zuführleitung (22, 24) mit einem Inline-Viskometer (30, 31) außerhalb des Farbstoff-Behälters (1, 2) und unmittelbar bei der Zuführleitung (22, 24);
automatisches Ausgeben von Lösemittel für Farbstoff in den Farbstoff-Behälter (1, 2) mit einer Ausgabeeinheit (26, 27) für Lösemittel, die einen automatischen Controller (17) aufweist, basierend auf einer Angabe der Viskositätsmessung des Farbstoffes innerhalb der Zuführleitung (22, 24), die von dem automatischen Controller (17) der Ausgabeeinheit (26, 27) für Lösemittel erhalten worden ist; und
Überführen von Farbstoff mit einer peristaltischen Rückführpumpe (4, 5) von der Napf-Vorrichtung (8) durch eine Rückführleitung (21, 23) in den Farbstoff-Behälter (1,2 ).

28. Verfahren nach Anspruch 27, bei dem das Überführen von Farbstoff mit einer peristaltischen Rückführpumpe (4, 5) von der Napf-Vorrichtung (8) durch eine Rückführleitung (21, 23) in den Farbstoff-Behälter (1, 2) einen negativen atmosphärischen Druck innerhalb des Luftspaltes erzeugt.

29. Verfahren nach Anspruch 27 oder Anspruch 28, bei dem Lösemittel für Farbstoff automatisch ausgegeben wird, wenn die Viskositätsmessung angibt, dass die Viskosität des Farbstoffes innerhalb der Zuführleitung (22, 24) einen vorbestimmten Grenzwert überschreitet.

30. Verfahren nach einem der Ansprüche 27 bis 29, bei dem Farbstoff und Luft, die sich in dem Napf befinden, zu dem Farbstoff-Behälter (1, 2) mit einer höheren Geschwindigkeit im Vergleich zu der Geschwindigkeit, mit der der Farbstoff von dem Farbstoff-Behälter (1, 2) zu dem Napf übertragen wird, übertragen werden.

31. Verfahren nach Anspruch 30, bei dem Farbstoff und Luft, die sich innerhalb des Napfes befinden, zu dem Farbstoff-Behälter (1, 2) mit wenigstens etwa dem Zweifachen der Geschwindigkeit übertragen werden, mit der der Farbstoff von dem Farbstoff-Behälter (1, 2) zu dem Napf übertragen wird.

32. Verfahren nach einem der Ansprüche 27 bis 31, bei dem die Druckvorrichtung (10) einen Drucktampon (7) aufweist, der sich benachbart dem Napf befindet, und Farbstoff in einen ersten Bereich des Napfes und aus einem zweiten Bereich des Napfes heraus übertragen wird, wobei der erste Bereich näher an dem Drucktampon (7) liegt als der zweite Bereich.

33. Verfahren nach einem der Ansprüche 27 bis 32, das zusätzlich den Schritt aufweist:
Messen der Viskosität des Farbstoffes innerhalb der Rückführleitung (21, 23) mit einem Inline-Viskometer (28, 29) außerhalb des Farbstoff-Behälters (1, 2) und unmittelbar bei der Rückführleitung (21, 23); und
automatisches Ausgeben von Lösemittel für Farbstoff in den Farbstoff-Behälter (1, 2) mit der Ausgabeeinheit (26; 27) für Lösemittel, basierend auf einer Angabe der Viskositätsmessung des Farbstoffes innerhalb der Rückführleitung (21, 23), die von dem automatischen Controller (17) erhalten worden ist.

34. Verfahren nach einem der Ansprüche 27 bis 33, das zusätzlich den Schritt des automatischen Mischens von Farbstoff und Lösemittel für Farbstoff, das in den Farbstoff-Behälter (1, 2) ausgegeben worden ist, basierend auf Lösemittel, das in den Farbstoff ausgegeben wird, aufweist.

35. Verfahren nach Anspruch 34, bei dem der Mischschritt mit einer Schaufel (13, 14) ausgeführt wird, die von einem Motor angetrieben wird, und bei dem die Schaufel (13, 14) auf einer Spindel angebracht und innerhalb des Farbstoff-Behälters (1, 2) angeordnet ist.

36. Verfahren nach einem der Ansprüche 27 bis 35, bei dem die peristaltische Pumpe (3-6) in der Lage ist, in einem nicht-positiven Verschiebungsmodus zu arbeiten.

## Revendications

1. Système pour présenter un colorant d'une viscosité régulée à un appareil à godets de colorant (8) qui est adjacent à un cliché d'impression au tampon (9) à utiliser pour une impression au tampon, ledit système comprenant :
■ un appareil à godets de colorant (8) qui est destiné à être positionné à côté d'un cliché d'impression au tampon (9) ;
■ un récipient de colorant (1, 2) comprenant du colorant ;
■ un conduit d'alimentation (22, 24) en communication fluidique avec ledit récipient de colorant (1, 2) et ledit appareil à godets (8) ;
■ un distributeur de solvant (26, 27) comprenant du solvant pour colorant en communication fluidique avec ledit récipient de colorant (1, 2) ;
■ un conduit de retour (21, 23) en communication fluidique entre ledit appareil à godets (8) et ledit récipient de colorant (1, 2) ; et
■ un viscosimètre (30, 31) ;
**caractérisé en ce que** le viscosimètre est un viscosimètre en ligne (30, 31) externe audit récipient de colorant (1, 2) et proche dudit conduit d'alimentation (22, 24) pour mesurer la viscosité du colorant à l'intérieur du conduit d'alimentation (22, 24) ;
et le système comprend en outre un mécanisme de commande (17) opérationnel pour distribuer le solvant pour colorant dans ledit récipient de colorant (1, 2) par ledit distributeur de solvant (26, 27), sur la base d'une mesure de viscosité effectuée par le viscosimètre en ligne (30, 31) proche dudit conduit d'alimentation (22, 24).

2. Système selon la revendication 1, comprenant de plus un deuxième viscosimètre en ligne (28, 29) externe audit récipient de colorant (1, 2) et proche dudit conduit de retour (21, 23) afin de mesurer la viscosité du colorant à l'intérieur du conduit de retour (21, 23).

3. Système selon la revendication 2, dans lequel ledit mécanisme de commande (17) est de plus opérationnel pour distribuer le solvant pour colorant dans ledit récipient de colorant (1, 2) par ledit distributeur de solvant (26, 27), sur la base d'une mesure de viscosité effectuée par le deuxième viscosimètre en ligne (28, 29) proche dudit conduit de retour (21, 23).

4. Système selon la revendication 2 ou 3, comprenant de plus un affichage opérationnel pour indiquer la viscosité du solvant sur la base d'une mesure de viscosité effectuée par au moins l'un parmi : ledit viscosimètre en ligne (30, 31) proche dudit conduit d'alimentation (22, 24) et ledit deuxième viscosimètre en ligne (28, 29) externe audit récipient de colorant (1, 2) et proche dudit conduit de retour (21, 23).

5. Système selon l'une quelconque des revendications précédentes, comprenant de plus un affichage opérationnel pour indiquer la viscosité du solvant sur la base d'une mesure de viscosité effectuée par ledit viscosimètre en ligne (30, 31) proche dudit conduit d'alimentation (22, 24).

6. Système selon l'une quelconque des revendications précédentes, dans lequel l'appareil à godets (8) comprend plusieurs godets de colorant, chaque godet de colorant comprenant une paroi substantiellement circulaire, une portion de couverture intérieure recouvrant ladite paroi et un entrefer au-dessous de ladite portion de couverture, dans lequel ledit conduit d'alimentation (22, 24) est en communication fluidique avec chaque godet de colorant et ledit conduit de retour (21, 23) est également en communication fluidique avec chacun desdits godets de colorant.

7. Système selon la revendication 6, comprenant en outre un cliché d'impression au tampon (9), dans lequel lesdits godets multiples comprennent deux godets dans une position substantiellement plane proche dudit cliché d'impression (9).

8. Système selon l'une quelconque des revendications précédentes, comprenant de plus une station d'impression (10) pour imprimer sur des objets, la station d'impression (10) comprenant un cliché d'impression au tampon (9) et l'appareil à godets (8), l'appareil à godets (8) étant adjacent au cliché d'impression au tampon (9) ; dans lequel le récipient de colorant (1, 2) comprend un récipient comprenant une indication d'un lot de fabrication de colorant, qui peut être associée à des objets particuliers imprimés à la station d'impression (10).

9. Système selon l'une quelconque des revendications précédentes, comprenant de plus un mélangeur (13, 14) positionné pour mélanger un colorant à l'intérieur du récipient de colorant (1, 2).

10. Système selon la revendication 9, dans lequel le mélangeur (13, 14) est opérationnel pour mélanger du colorant et du solvant à l'intérieur dudit récipient de colorant (1, 2) sur la base d'une indication provenant du mécanisme de commande (17) pour distribuer le solvant pour colorant dans ledit récipient de colorant (1, 2) par ledit distributeur de solvant (26, 27).

11. Système selon la revendication 10, dans lequel ledit mélangeur (13, 14) comprend une broche entraînée par un moteur et une palette installée sur ladite broche, dans lequel ladite palette est positionnée à l'intérieur du récipient de colorant (1, 2) en contact fluidique avec le colorant contenu à l'intérieur du récipient de colorant (1, 2).

12. Système selon l'une quelconque des revendications précédentes, dans lequel ledit distributeur de solvant (26, 27) comprend une soupape d'entrée de solvant en communication avec ledit contrôleur (17) pour distribuer du solvant pour colorant dans le colorant sur la base d'un signal reçu dudit viscosimètre en ligne (28 à 31).

13. Système selon l'une quelconque des revendications précédentes, comprenant de plus une pompe d'alimentation (3, 6) opérationnelle pour transférer du colorant sous pression positive dudit récipient de colorant (1, 2) audit appareil à godets (8).

14. Système selon la revendication 13, dans lequel ladite pompe d'alimentation (3, 6) comprend une pompe péristaltique, une pompe de type centrifuge, une pompe à engrenage, une pompe ayant une fonction de refoulement, ou une combinaison quelconque de celles-ci.

15. Système selon la revendication 14, dans lequel ladite pompe d'alimentation (3, 6) est une pompe péristaltique proche dudit conduit d'alimentation (22, 24).

16. Système selon l'une quelconque des revendications précédentes, comprenant de plus une pompe de retour (4, 5) opérationnelle pour transférer du colorant dudit appareil à godets (8) audit récipient de colorant (1, 2).

17. Système selon la revendication 16, dans lequel ladite pompe de retour (4, 5) est de plus opérationnelle pour fournir une pression atmosphérique négative sous ledit appareil à godets (8).

18. Système selon la revendication 17, dans lequel ladite pompe de retour (4, 5) comprend une pompe péristaltique, une pompe de type centrifuge, une pompe à engrenage, une pompe ayant une fonction de refoulement, ou une combinaison quelconque de celles-ci.

19. Système selon la revendication 17, dans lequel ladite pompe de retour (4, 5) est une pompe péristaltique proche dudit conduit de retour (21, 23).

20. Système selon l'une quelconque des revendications 1 à 12, comprenant de plus une pompe d'alimentation péristaltique (3, 6) opérationnelle pour transférer du colorant sous une pression positive dudit récipient de colorant (1, 2) vers ledit appareil à godets (8) et une pompe de retour péristaltique (4, 5) opérationnelle pour transférer du colorant dudit appareil à godets (8) vers ledit récipient de colorant (1, 2).

21. Système selon l'une quelconque des revendications 13 à 20, dans la mesure où elles dépendent de la revendication 13, comprenant de plus un dispositif de support (20) monté sur roulettes (18) afin de faciliter la mobilité dudit dispositif de support (20) et des objets attachés ou portés par le dispositif de support (20), dans lequel ledit récipient de colorant (1, 2), ladite pompe d'alimentation (3, 6), ledit viscosimètre d'alimentation en ligne (30, 31), ledit conduit d'alimentation (22, 24), ledit conduit de retour (21, 23) et le mécanisme de commande (17) sont tous portés par le dispositif de support (20).

22. Système selon la revendication 21, comprenant de plus un coupleur de conduit (25) en ligne sur le conduit d'alimentation (22, 24) opérationnel pour débrancher une première portion du conduit d'alimentation (22, 24), portée par le dispositif de support (20), d'une deuxième portion du conduit d'alimentation (22, 24), attachée au dispositif à godets (8), et un coupleur de conduit (25) en ligne sur le conduit de retour (21, 23) opérationnel pour débrancher une première portion du conduit de retour (21, 23), portée par le dispositif de support (20), d'une deuxième portion du conduit de retour (21, 23), attachée au dispositif à godets (8).

23. Système selon l'une quelconque des revendications précédentes, comprenant de plus un dispositif de régulation de température pour maintenir la température du colorant dans le récipient de colorant (1, 2) entre une température de seuil supérieure et une température de seuil inférieure.

24. Système selon l'une quelconque des revendications précédentes, dans lequel une majeure partie du conduit de retour (21, 23) présente une superficie de la section qui est supérieure à celle d'une majeure partie du conduit d'alimentation (22, 24).

25. Système selon l'une quelconque des revendications précédentes, dans lequel ledit viscosimètre en ligne (28 à 31) comprend :
■ une chambre avec une première extrémité et une deuxième extrémité pour contenir du colorant ;
■ une première bobine électrique positionnée autour de la première extrémité de la chambre et une deuxième bobine électrique positionnée autour de la deuxième extrémité de la chambre ; et
■ un piston à l'intérieur de la chambre et opérationnel pour se déplacer d'un côté de la chambre vers l'autre côté de la chambre sur la base d'une charge électrique dans l'une ou les deux des première et deuxième bobines électriques.

26. Système selon la revendication 25, comprenant de plus un capteur de température de viscosimètre opérationnel pour mesurer la température du colorant à l'intérieur du viscosimètre (28 à 31).

27. Procédé consistant à fournir du colorant d'une viscosité régulée à un appareil d'impression (10) pour une utilisation dans une impression au tampon, le procédé comprenant les étapes consistant à :
■ positionner un appareil à godets de colorant (8) à côté d'un cliché d'imprimante (9), dans lequel ledit appareil à godets (8) comprend un godet comprenant une portion de couverture intérieure, une paroi contiguë autour de la circonférence de la portion de paroi intérieure et un entrefer au-dessous de ladite portion de couverture et à l'intérieur d'un périmètre formé par la paroi ;
■ transférer un colorant par une pompe péristaltique d'alimentation (3, 6) d'un récipient de colorant (1, 2), externe audit appareil d'impression, à travers un conduit d'alimentation (22, 24) jusqu'à un appareil à godets (8) ;
■ mesurer la viscosité du colorant à l'intérieur du conduit d'alimentation (22, 24) avec un viscosimètre en ligne (30, 31) externe audit récipient de colorant (1, 2) et proche dudit conduit d'alimentation (22, 24) ;
■ distribuer automatiquement du solvant pour colorant dans ledit récipient de colorant (1, 2) par un distributeur de solvant (26, 27) comprenant un contrôleur automatique (17), sur la base d'une indication de la mesure de viscosité du colorant à l'intérieur du conduit d'alimentation (22, 24), reçue par le contrôleur automatique (17) du distributeur de solvant (26, 27) ; et
■ transférer du colorant par une pompe péristaltique de retour (4, 5) de l'appareil à godets (8) à travers un conduit de retour (21, 23) jusqu'au récipient de colorant (1, 2).

28. Procédé selon la revendication 27, dans lequel le transfert du colorant par une pompe péristaltique de retour (4, 5) de l'appareil à godets (8) à travers un conduit de retour (21, 23) jusqu'au récipient de colorant (1, 2) crée une pression atmosphérique négative à l'intérieur de l'entrefer.

29. Procédé selon la revendication 27 ou 28, dans lequel le solvant pour colorant est distribué automatiquement si la mesure de viscosité indique que la viscosité du colorant à l'intérieur du conduit d'alimentation (22, 24) dépasse un seuil prédéterminé.

30. Procédé selon l'une quelconque des revendications 27 à 29, dans lequel le colorant et l'air se trouvant à l'intérieur dudit godet sont transférés audit récipient de colorant (1, 2) à une vitesse plus élevée en comparaison avec la vitesse à laquelle le colorant est transféré dudit récipient de colorant (1, 2) audit godet.

31. Procédé selon la revendication 30, dans lequel le colorant et l'air se trouvant à l'intérieur du godet sont transférés audit récipient de colorant (1, 2) à une vitesse au moins deux fois supérieure à la vitesse à laquelle le colorant est transférée dudit récipient de colorant (1, 2) audit godet.

32. Procédé selon l'une quelconque des revendications 27 à 31, dans lequel l'appareil d'impression (10) comprend un tampon d'impression (7) qui est positionné à côté dudit godet, et du colorant est transféré dans une première portion dudit godet et hors d'une deuxième portion dudit godet, ladite première portion étant située plus proche dudit tampon d'impression (7) que ladite deuxième portion.

33. Procédé selon l'une quelconque des revendications 27 à 32, comprenant de plus l'étape consistant à :
■ mesurer la viscosité du colorant à l'intérieur du conduit de retour (21, 23) avec un viscosimètre en ligne (28, 29) externe audit récipient de colorant (1, 2) et proche dudit conduit de retour (21, 23) ; et
■ distribuer automatiquement du solvant pour colorant dans ledit récipient de colorant (1, 2) par le distributeur de solvant (26, 27), sur la base d'une indication de la mesure de viscosité du colorant à l'intérieur du conduit de retour (21, 23), reçue par le contrôleur automatique (17).

34. Procédé selon l'une quelconque des revendications 27 à 33, comprenant de plus l'étape consistant à mélanger automatiquement du colorant et du solvant pour colorant distribués dans le récipient de colorant (1, 2) sur la base du solvant distribué dans le colorant.

35. Procédé selon la revendication 34, dans lequel l'étape de mélange est exécutée à l'aide d'une palette (13, 14) entraînée par un moteur, et dans lequel ladite palette (13, 14) est installée sur une broche et positionnée à l'intérieur du récipient de colorant (1, 2).

36. Procédé selon l'une quelconque des revendications 27 à 35, dans lequel ladite pompe péristaltique (3 à 6) est capable de fonctionner dans un mode de déplacement non-positif.
